# EUROPÄISCHE PATENTANMELDUNG

(11) **EP 0 603 706 A1**
(43) Veröffentlichungstag der Anmeldung: **29.06.1994**
(21) Anmeldenummer: 93120092.7
(22) Anmeldetag: 13.12.1993
(51) Int. Cl.: G09F 13/18

(54) **Lichtleitplatten zur Beleuchtung auswechselbarer Informationen**

(30) Priorität: 19.12.1992 DE 9217383 U
(71) Anmelder: Röhm GmbH, D-64293 Darmstadt (DE)
(72) Erfinder: Fischer, Udo, Dr., D-64297 Darmstadt (DE); Willing, Achim, Dr.-Ing., D-9610 ASchesslitz (DE)

(57) **Zusammenfassung**

Die Erfindung umfaßt eine beleuchtete Informationsvorrichtung, bestehend aus einer durchsichtigen Kunststoffplatte (1), vorwiegend aus Acrylglas, in die insbesondere parallel zu den Außenkanten (2, 3, 4, 5) der Kunststoffplatte (1) mindestens ein Leuchtelement (6) in Röhrenform in eine Aussparung (7) so eingebaut ist, daß das Leuchtelement (6) in seiner Länge vollständig von Kunststoffmaterial umgeben ist. Der vom Leuchtelement (6) erzeugte Lichtstrom dringt wegen Reflexion an Schichten (8) im Leuchtelement (6) nur durch die vorgegebene Stelle (9) in die parallel dazu verlaufende Kunststoffplatte (1) ein und bringt die auf deren Rückseite klebende, aber wieder leicht abziehbare Informationsfolie (10) zum Leuchten.

## Beschreibung

Die Erfindung betrifft eine plattenförmige Vorrichtung aus durchsichtigem Kunststoff, insbesondere Acrylglas, die mit Hilfe wenigstens eines Leuchtelements zur Lichtleitplatte ausgebaut ist und dessen Licht zur Beleuchtung auswechselbarer Informationen dient.

Aus dem Stand der Technik sind verschiedene Vorrichtungen zur beleuchteten Darstellung von Bildern und insbesondere von Informationen bekannt. Das deutsche Gebrauchsmuster G 82 29 147.0 beschreibt eine Vorrichtung zur optischen Darstellung eines Bildmotivs, bestehend aus einer durchsichtigen Platte, vorzugsweise aus Acrylglas, die mindestens von einer Seitenfläche her mit einer außerhalb der Bildplatte befindlichen Lichtquelle beleuchtet ist, deren Licht nahezu vollständig in die Platte fällt, die das darzustellende Bild als Eingravierungen enthält.

Aus der EP-A 0 306 659 ist eine kastenförmige Vorrichtung bekannt, deren vorderer Teil eine fluoreszierende Partikel enthaltende Lichtleitplatte ist, in die wenigstens ein Leuchtelement an wenigstens einer seitlichen Begrenzungskante eingelassen ist und an deren Rückseite Anzeigesymbole in Folienform aufgeklebt sind.

Eine andere beleuchtete Anzeigeneinheit, insbesondere Hausnummer, Verkehrsschild, Werbeträger, ist in der EP-A 0 403 764 beschrieben, bei der eine Lichtleitplatte, z.B. aus Acrylglas, auf welcher die zu beleuchtenden Anzeigesymbole auf der vom Betrachter abgewandten Seite angebracht, z.B. aufgeklebt sind, in eine Lichtleitleiste eingesetzt ist, die eine größere Dicke als die Lichtleitplatte aufweist und das Leuchtelement enthält.

Die bekannten beleuchteten Anzeigeeinheiten entsprechend dem bisher üblichen Bauprinzip, weisen einige Nachteile auf. Sowohl Kasten-förmige bzw. Gehäuse-Anordnungen mit den an den Kanten außen angebrachten Lichtleitleisten machen die Vorrichtungen schwer und teuer. Der lichttechnische Nachteil dieser Ausführungsformen besteht darin, daß nur ein kleiner Anteil des von den Leuchtelementen erzeugten Lichtstroms in die parallel zur Lampenachse angeordneten durchsichtigen Platten, z.B. Acrylglas-Platten eindringen kann, so daß die erreichbare Leuchtdichte und der Wirkungsgrad der Anlage niedrig sind.

Eine Aufgabe der vorliegenden Erfindung besteht daher darin, eine plattenförmige Vorrichtung aus durchsichtigem Kunststoff, insbesondere aus Acrylglas, vorzuschlagen, die so mit einem Leuchtelement ausgestattet ist, daß sie eine Lichtleitplatte mit hoher Leuchtdichte und verbessertem Wirkungsgrad darstellt. Eine weitere Aufgabe dieser Erfindung ist, die Lichtleitplatte für die Beleuchtung häufig auszuwechselnder Informationen, wie z.B. Fahrpläne, Theaterspielpläne u.ä., als Informationsträger attraktiv zu machen.
Die Lösung dieser Aufgabe wird durch die Vorrichtung gemäß Anspruch 1 erreicht, wonach diese aus einer durchsichtigen Kunststoffplatte (1), vorwiegend aus Acrylglas, besteht, in die insbesondere parallel zu den Außenkanten (2,3,4,5) mindestens ein Leuchtelement (6), z.B. eine Leuchtstofflampe in Röhrenform, in eine Aussparung (7) so eingebaut ist, daß diese Lampe in ihrer Länge vollständig von dem Kunststoffmaterial umgeben ist, wobei der von der Lampe erzeugte Lichtstrom wegen Reflexion an Schichten (8) in oder auf der Lampe und/oder an der Kunststoffwandung der Röhreneinlassung, nur durch die vorgegebene Stelle (9) in die Parallel dazu weiterlaufende Kunststoffplatte eindringt und die auf deren Rückseite leicht wieder abziehbar klebende, auf Papier oder Folie stehende Information (10) zum Leuchten bringt.

Durch diese neue Gestaltung von Lichtleitplatten mit ihren wesentlich höheren Wirkungsgraden hinsichtlich ausnutzbarer Lichtenergie, lassen sich diese wirtschaftlicher betreiben und in flacheren Bauformen ausführen. Der auf der Sichtseite mit Klebsstoff versehene Informationsträger liegt eng und dauerhaft wie vorgesehen an der transparenten Kunststofftafel an. Es resultiert so eine glatte Auflage ohne Lufteinschlüsse und damit volle Reflexion an der Informationsträger-Oberfläche.

Die Erfindung wird anhand der Zeichnungen und in den dazu gehörenden Beschreibungen näher erläutert.

Es zeigen:

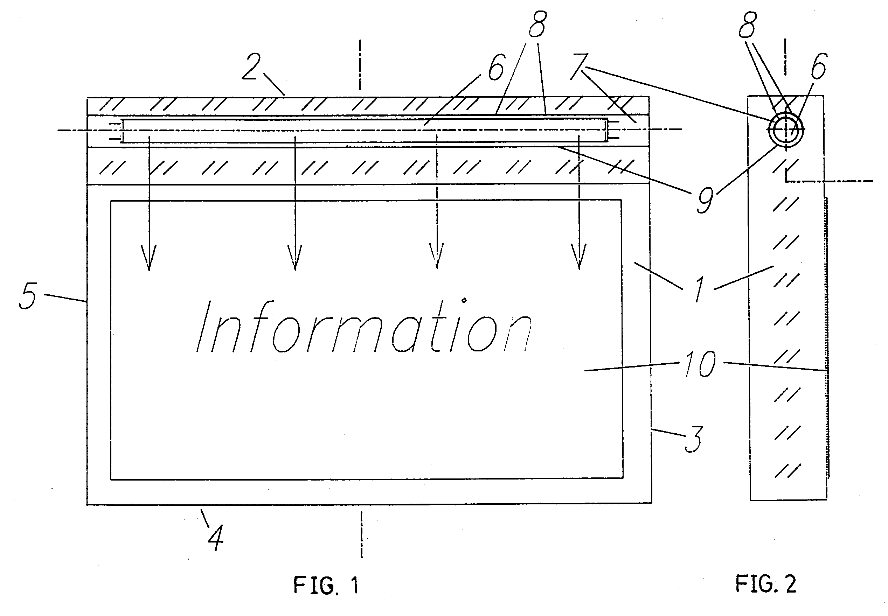

- Fig. 1:: eine Draufsicht auf die neue Gestaltung der Lichtleitplatte mit Informationsträger, Röhreneinlassung und Leuchtröhre mit Reflexionsschichten und gerichtetem Lichtaustritt und
- Fig. 2:: Querschnitt der Lichtleitplattengestaltung mit Röhreneinlassung, Leuchtröhre, Reflexionsschichten, gerichtetem Lichtaustritt und anhaftendem Informationsträger.

Die beleuchtete Informationseinrichtung besteht aus einer ebenen, als Lichtleiter wirkenden Platte 1 aus durchsichtigem Kunststoff, insbesondere aus Acrylglas wie es als Polymethylmethacrylat-Kunststoff beispielsweise unter dem Markennamen Plexiglas ® im Handel ist, oder aus Polystyrol oder anderen transparenten Thermoplasten. Als Platten werden nahtlose und fugenlose Stücke verwendet, die in ihren Längen- und Höhendimensionen den vorgesehenen Informationsvorrichtungen angepaßt werden können. Die Maße reichen vom Zentimeterbereich bis in den Meterbereich. Die Plattendicke sollte mindestens 5 mm, insbesondere mindestens 10 mm, z.B. 15 mm betragen. In Kantennähe ist vorzugsweise parallel zu den Kanten 2,3,4,5 mindestens eine Aussparung 7 vorhanden, in welche das Leuchtelement 6 in Röhrenform eingebracht ist. Die Aussparungen 7 sind vor allem zylindrische Hohlräume in dem massiven Kunststoffmaterial und können durch Bohren, durch Kleben z.B. gefräster Teile oder bei der Extrusion erzeugt sein, wobei Länge und Durchmesser der Vertiefungen durch das zu verwendende Leuchtelement bestimmt werden. Als Leuchtelemente 6 werden vor allem solche in Röhrenform verwendet. Solche Leuchtstofflampen und Leuchtstoffröhren sind beispielsweise mit Durchmessern von 8 mm oder 16 mm u.a. im Handel erhältlich. Die Leuchtelemente 6 der Informationsvorrichtung können wahlweise weißes und/oder farbiges Licht abgeben. Ein Verschluß aus abdichtendem und elektrisch isolierendem Material schützt die Lichtröhre gegen die Atmosphäre ab.
Zur Vermeidung von Lichtabstrahlungen in ungewünschte Richtungen der Lichtleitplatte und damit von Lichtverlust, sind die röhrenförmigen Leuchtelemente und/oder die Wandung der Röhreneinlassung mit Reflexionsschichten 8 versehen, die z.B. durch Flüssigverspiegelung auf der Acrylglasoberfläche des zylindrischen Hohlraums herstellbar sind. Der gesamte Lichtstrom wird so durch den vorgegebenen lichtoffenen Spalt 9 in die Kunststoffplatte 1 gerichtet geleitet und steht für die zu beleuchtende Information 10 voll zur Verfügung.
Die Information ist in der Regel auf Papier oder Folien gedruckt oder geschrieben. Für eine gute Ausleuchtung und damit ein gutes Leuchten der Information muß der Informationsträger sehr innig an den möglichst ebenen Lichtleitplatten anliegen und so lange wie nötig dort so verharren. Dies läßt sich dadurch erreichen, daß Papier oder Folie auf ihren Sichtseiten mit Klebstoffen ausgerüstet sind, die temporäre Befestigungen auf der Rückseite der Kunststoffplatte ermöglichen.
Bei der Auswechslung von Informationen mit Entfernung der obsoleten Information durch Abziehen des Informationsträgers von der Kunststoffplatte darf darauf kein sichtbarer Klebstoffrückstand bleiben.

Die Erfindung besteht weiter im Vorschlag einer einfachen und preiswerten Beklebung, mit der sich die Informationsträger ohne Lufteinschlüsse und damit voll reflektierend an die Rückseite der Lichtleitplatten andrücken und ohne Spuren hinterlassend abziehen lassen. Klebstoffe mit solchen Eigenschaften sind bekannte Homo- und Copolymere, die insbesondere mit Acrylatmonomeren hergestellt sind. Sie können als Polyacrylat-Lösungen eingesetzt werden. Vorteilhafter ist es jedoch Dispersionsklebstoffe, insbesondere solche auf Polyacrylat-Basis zu verwenden, die mit Wasser als Dispersionsmedium hergestellt werden. Die dispergierten, für die Herstellung von Verklebungen brauchbaren Polymeren liegen insbesondere als vernetzte Polymerteilchen vor. In dieser Form sind sie bekannt als Haft- oder auch als Sprühklebstoffe, z.B. für die Herstellung von Verklebungen, bei denen eine spätere Trennung vorgesehen ist, wie z.B. für Klebebänder und Klebefolien, Selbstklebeetiketten u.a.
Beispielhaft sei eine für die Herstellung der Klebeschicht in der erfindungsgemäßen Vorrichtung geeignete Dispersion, nämlich Plextol ® DV240, die ein vernetztes Copolymerisat auf Poly(meth)acrylat-Basis in feindispergierter Form enthält, genannt.

Für die Aufstellung der erfindungsgemäßen Informationsvorrichtung unter offenem Himmel empfiehlt sich, diese wenigstens teilsweise mit einem Rahmen oder einer Abdeckung zu versehen, die vor allem das Eindringen von Regenwasser verhindern.

## Patentansprüche

1. Beleuchtete Informationsvorrichtung, bestehend aus einer durchsichtigen Kunststoffplatte (1), vorwiegend aus Acrylglas, in die insbesondere parallel zu den Außenkanten (2,3,4,5) mindestens ein Leuchtelement (6) in Röhrenform in eine Aussparung (7) so eingebaut ist, daß die Lichtröhre in ihrer Länge vollständig von dem Kunststoffmaterial umgeben ist, wobei der von der Röhre erzeugte Lichtstrom wegen Reflexion an Schichten (8) in der Röhre und/oder an der Kunststoffwandung der Röhreneinlassung nur durch die vorgegebene Stelle (9) in die Parallel dazu weiterlaufende Kunststoffplatte eindringt, und die auf deren Rückseite klebende aber wieder leicht abziehbare, auf Papier oder Folie stehende Information (10) zum Leuchten bringt.

2. Beleuchtete Informationsvorrichtung nach Anspruch 1, dadurch gekennzeichnet, daß die Kunststoffplatte (1) ein Polymethylmethacrylat-Kunststoff ist und die Aussparung (7) bei der Extrusion der Platte gebildet wurde.

3. Beleuchtete Informationsvorrichtung nach Anspruch 1, dadurch gekennzeichnet, daß die Aussparung (7) durch Ausbohrung erhalten wurde.

4. Beleuchtete Informationsvorrichtung nach Anspruch 1, dadurch gekennzeichnet, daß die Aussparung (7) durch Verklebung zweier, z.B. gefräster Teile erhalten wurde.

5. Beleuchtete Informationsvorrichtung nach den Ansprüchen 1 bis 3, dadurch gekennzeichnet, daß der Informationsträger (10) mit einem Dispersionsklebstoff auf Poly(meth)acrylat-Basis angeklebt ist.

6. Beleuchtete Informationsvorrichtung nach den Ansprüchen 1 bis 4, dadurch gekennzeichnet, daß der Informationsträger (10) mit einem Sprühkleber angeklebt ist.
